# EUROPEAN PATENT APPLICATION

(11) **EP 1 108 387 A2**
(43) Date of publication of application: **20.06.2001**
(21) Application number: 00127523.9
(22) Date of filing: 15.12.2000
(51) Int. Cl.: A47J 36/26

(54) **Burner case**

(30) Priority: 16.12.1999 JP 35776099
(71) Applicant: Snow Peak, Inc., Sanjo-City, Niigata, 955 (JP)
(72) Inventor: Yokoyama, Hiroaki, c/o Snow Peak, Inc., Sanjo-city, Niigata (JP); Abe, Toshiaki, Niitsu-city, Niigata (JP); Azeyagi, Hideki, Niigata-city, Niigata (JP)
(74) Representative: Zimmermann, Gerd Heinrich

(57) **Abstract**

A burner case (14) has at least one burner (11) therein and has an upper surface (12) formed with at least one opening (13). A flame produced by the burner (11) is introduced externally through the opening (13) for heating an object put on the upper surface (12) of the burner case (14). The upper surface (12) of the burner case (14) is formed along the opening (13) with an upwardly projecting louver (15). The louver (15) acts as a windshield for the flame. For instance, the opening (13) is an annular opening, and the louver (15) is formed in inclination along the annular opening at an outer edge of the annular opening.

## Description

The invention relates to a burner case for housing therein a burner to be used for cooking out of doors, and more particularly to a burner case for housing therein a burner, which is capable of preventing a flame generated from a burner, form being extinguished due to wind.

In cooking out of doors, a burner assembly is often used in order to make it unnecessary to manually set fire, and keep thermal power constant for enhancing convenience in cooking.

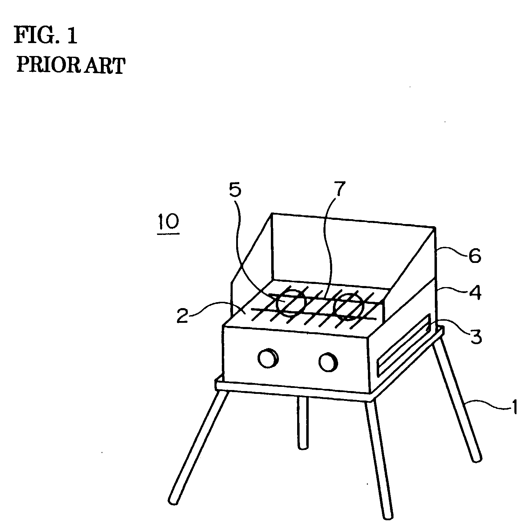

Fig. 1 illustrates a conventional burner assembly 10 used for cooking out of doors.

The illustrated burner assembly 10 is mounted centrally on a table 1 having four legs. The burner assembly 10 is comprised of a burner case 4 which is open upwardly and has an air inlet 3 at sidewalls thereof, Bunsen burners 5 housed in the burner case 4, a wind shield 6 surrounding the burner case 4 at three sides, and a stand 7 comprised of a net and put on the open space 2 of the burner case 4.

The Bunsen burners 5 are in communication with a fuel tank (not illustrated) in the burner case 4. An object such as a kettle is put on the stand 7 to be heated by a flame generated from the Bunsen burners 5.

The wind shield 6 surrounding the burner case 4 prevents a flame generated from the burners 5, from being fanned by wind with the result of reduction in a heat transfer efficiency, and further prevents a flame from being extinguished in a windy day.

The windshield 6 upwardly extends from the burner case 4, and has a length to cover three sides of the burner case 4, and hence, it is inconvenient to carry the windshield 6 as it is.

Thus, there has been suggested a burner assembly having a windshield which is designed to be detachable from the burner case 4 and has wings both of which are foldable by means of a hinge. When the burner assembly is to be carried, the windshield can be detached from the burner case 4, and the wings are folded. Hence, the windshield can be treated as a planar structure.

There has been also suggested a burner assembly having a windshield comprised of three wings connected to the burner case 4 independently of one another by means of hinges. The three wings are connected to one another through connectors, when used. When the burner case 4 is to be carried, the three wings are disconnected from one another, and fallen down over the open space 2 or along sidewalls of the burner case 4. Thus, the burner assembly can be reduced in size, when carried.

However, the above-mentioned burner cases are accompanied with the following problems.

For instance, if the windshield is detached from the burner case and is taken custody separately from the burner case, the windshield may be lost.

When the burner assembly 10 is used for cooking out of doors, a lot of persons enjoy cooking in many cases. Since the windshield 6 surrounds the burner case 4 at three sides, foods on the stand 7 can be taken only from an open side of the windshield 6. As a result, it was impossible for a lot of persons to surround the burner assembly 10 and enjoy foods baked on the stand 7.

In addition, in the conventional burner assembly 10, since the opening 2 between the meshes comprising the stand 7 is so large that heat supplied from the flame much escapes through the opening 2 around an object such as a kettle to be heated on the stand 7. Hence, the conventional burner assembly 10 is accompanied with a problem of poor transfer of heat to an object to be heated.

Furthermore, if a direction in which wind blows changes during cooking foods, it would be necessary to turn the burner assembly 10 so that the windshield 6 faces wind in order to prevent the flame from being fanned by wind. However, when the burner assembly 10 is to be turned, there is a risk that the burner assembly 10 may be fallen down. Hence, it is preferable that the burner assembly 10 is kept stationary, even if a wind direction changes.

The present invention intends to overcome the above problems. The object is solved by the burner case according to independent claims 1 and 18.

Further advantages, features, aspects and details of the invention are evident from the dependent claims, the description and the accompanying drawings.

The present invention generally relates to a burner case. In particular it relates to a burner case used for cooking.

In view of the above-mentioned problems in the conventional burner assemblies, it is an object of the present invention to provide a burner case used for a burner assembly, which burner is capable of making it no longer necessary to use a windshield, thereby enhancing convenience in carrying the burner assembly, making it possible to take foods baked on the burner case from every direction, enhancing an efficiency with which heat is transferred to an object to be heated, and making it no longer necessary to turn the burner assembly, even if a wind direction changes.

There is provided a burner case in which at least one burner is to be arranged and which has an upper surface formed with at least one opening, a flame produced by the burner being introduced externally through the opening for heating an object put on the upper surface of the burner case, the upper surface being formed along the opening with an upwardly projecting louver which acts as a windshield for the flame.

The burner case is formed with a louver in place of a windshield which a conventional burner assembly necessarily had. The louver upwardly projects along the opening formed at an upper surface of the burner case. The louver has the same function as a windshield, that is, prevents a flame from being fanned by wind.

Though the louver upwardly projects from an upper surface of the burner case, it is not necessary for the louver to be high. Hence, the louver is not a bar to carriage of a burner assembly including the burner case. In addition, since a burner assembly including the burner case no longer has a windshield, it is possible to take foods baked on the burner case, from every direction.

Since the louver can be fabricated integral with an upper surface of the burner case, it is possible to avoid an increase in costs in fabrication of a burner assembly including the burner case.

Furthermore, since the louver serves as a plate on which cooking tools are to be put, it is no longer necessary for a burner assembly including the burner case to have a net or a support stand which the conventional burner assembly had to include. However, it should be noted that a net or a support stand might be used in a burner assembly including the burner case.

It is preferable that burners are shaped in conformity with a shape of the opening formed with the upper surface of the burner case, in order to enhance an efficiency with which heat is transferred to an object to be heated.

For instance, the opening may be formed as an annular opening, and the louver may be formed in inclination along the annular opening at an outer edge of the annular opening.

By designing the opening to be an annular opening and forming the louver along the annular opening at an outer edge of the opening, it would be possible to prevent a flame from being fanned in every direction, and converge a flame to an axis of the annular opening, ensuring that heat is surely transferred to cooking tools with the result of enhancement of an efficiency with which heat is transferred to cooking tools.

For instance, the opening may be comprised of a plurality of annular openings coaxial with one another, and the louver may be formed in the same inclination along each of the annular openings, in which case, it is preferable that the louver is formed at outer edges of the annular openings.

By designing the opening to be a plurality of annular openings, it would be possible to converge a flame to a certain area, and to put a cooking tool such as a pan on the upper surface of the burner case without using a net or a support stand. In addition, a plurality of annular openings provides a large opening area. Hence, by using a burner producing high calorific power, an object to be heated can be well and uniformly heated.

As an alternative, the opening may be comprised of a plurality of annular openings coaxial with one another, and louvers may be formed in opposite inclination along edges of adjacent annular openings among the annular openings.

Specifically, first and second louvers may be formed along outer and inner edges of each of the annular openings, respectively, the first and second louvers being directed towards an axis of each of the annular openings.

By designing the opening as mentioned above, the above-mentioned advantages can be obtained.

For instance, the opening may be a slit, and the louver may be formed along an edge of the slit.

When the opening is formed as a slit, it is preferable that the louver has opposite rounded ends such that the louver surrounds the slit at three sides.

The louver having opposite ends which are formed rounded prevents a flame from being fanned in three directions. That is, the louver interrupts not only wind coming outwardly of the slit, but also wind coming in an axial direction of the silt.

As an alternative, the opening may be comprised of a plurality of slits arranged in parallel with one another, and the louver may be formed in the same inclination along each of the slits, in which case, the louver is formed preferably at outer edges of the slits.

This arrangement increases an area in which a flame is applied to an object to be heated, and hence, enhances an efficiency with which heat is transferred to an object. In addition, the arrangement makes it possible to put cooking tools having various sizes, on the upper surface of the burner case.

By arranging the slits in parallel with one another, it would be possible to prevent wind from backwardly and obliquely entering the slits. This is because that since a width of the opening is small, wind obliquely entering a first slit is interrupted by a louver associated with a second slit located adjacent to the first slit.

The opening may be comprised of a plurality of slits arranged in coaxial semi-circles.

By designing the opening as mentioned above, it would be possible to prevent wind from entering the slits in three directions except a direction facing the louver.

The opening may be comprised of a plurality of slits arranged in parallel with one another, and the louver may be formed in opposite inclination along edges of adjacent slits among the slits.

Specifically, first and second louvers are formed along outer and inner edges of each of the slits, respectively, the first and second louvers being directed towards an opposite edge of each of the slits.

By designing the louvers as mentioned above, it would be possible to prevent wind from entering the slits from frontward and backward directions of the slits, and to converge a flame to a certain area, ensuring enhancement in a heat transfer efficiency.

For instance, the louver may be in the form of a hollow projection covering the opening therewith, the projection having a triangle cross-section such that the projection has two sidewalls, at least one of the sidewalls being designed to be able to be open and closed.

In the above-mentioned burner case, the projection acts as a louver. Hence, the burner case provides the same advantages as the advantages obtained by the earlier mentioned burner case.

In accordance with the burner case, it would be possible to control a flame by closing the sidewall on which a cooking tool is not put. Hence, it would be possible to enhance a heat transfer efficiency by designing a size of the sidewall in accordance with a size of a cooking tool to be put on the sidewall.

If both the sidewalls are designed to be able to open and closed, it would be possible to prevent a flame from being fanned by wind by closing one of the sidewalls and opening the other of the sidewalls in accordance with a wind direction, even if a wind direction varies during cooking.

For instance, the sidewalls is swingable around a lower end thereof relative to the upper surface of the burner case, in which case, the burner case is designed to have a sidewall stopper which keeps the at least one of the sidewalls closed.

By designing the sidewalls as mentioned above, the sidewalls can be readily open and closed.

For instance, the sidewall stopper is comprised of a hook fixed to an outer surface of the projection in the vicinity of a summit of the projection.

The sidewall stopper keeps the sidewall closed, if necessary, and prevents the sidewall from being open.

For instance, the louver is in the form of a hollow projection covering the opening therewith, the projection having a triangle cross-section such that the projection has two sidewalls, at least one of the sidewalls being formed with at least one second opening, the burner case further comprising a slide plate formed with a third opening, the slide plate being slidable along an outer surface of the at least one of the sidewalls, the at least one of the sidewalls being open when the third opening is in alignment with the second opening, and being closed when the third opening is not in alignment with the second opening.

The burner case provides the same advantages as the advantages obtained by the earlier mentioned burner cases.

There is further provided a burner case in which at least one burner is to be arranged and which has an upper surface formed with at least one opening, a flame produced by the burner being introduced externally through the opening for heating an object put on the upper surface of the burner case, the burner case including a shield plate rotatable in the opening such that the shield plate entirely closes the opening and the shield plate at least partially opens the opening, and a shield plate locker which keeps the shield plate at a desired angle relative to the opening.

Even if a wind direction varies during cooking, it would be possible to prevent a flame from being fanned by wind by rotating the shield plate to adjust an inclination of the shield plate in accordance with a wind direction, and then, fixing the shield plate in the position.

For instance, the shield plate locker is comprised of shafts extending from the shield plate at opposite ends thereof and each having a rectangular cross-section, and bearings formed at the upper surface to support the shafts therewith, the bearings being formed with a recess having a cross-section which is the same as a half of the rectangular cross-section of the shafts.

It is preferable that the above-mentioned upper surface is detachable from the burner case.

By designing the upper surface detachable from a burner case, it would be possible to detach the upper surface in a windless day, and put a net or a support stand in place of the upper surface of the burner case. Thus, a burner assembly including the burner case may be used in the same manner as that of a conventional burner assembly.

In addition, the detached upper surface can be readily washed.

The invention will be better understood by reference to the following description of embodiments of the invention taken in conjunction with the accompanying drawings, wherein:

Fig. 1 is a perspective view of a conventional burner assembly.

Fig. 2 is a perspective view of a burner case in accordance with the first embodiment of the present invention.

Fig. 3 is a cross-sectional view of the burner case, taken along the line III-III in Fig. 2.

Fig. 4 is an enlarged perspective view of the opening in the burner case illustrated in Fig. 1.

Fig. 5 is an enlarged perspective view of the opening in the burner case in accordance with the second embodiment.

Fig. 6 is a cross-sectional view taken along the line VI-VI in Fig. 5.

Fig. 7 is an enlarged perspective view of the opening in the burner case in accordance with the third embodiment of the present invention.

Fig. 8 is a cross-sectional view taken along the line VIII-VIII in Fig. 7.

Fig. 9 is a perspective view of a burner case in accordance with the fourth embodiment of the present invention.

Fig. 10 is a cross-sectional view taken along the line X-X in Fig. 9.

Fig. 11 is a perspective view of a burner case in accordance with the fifth embodiment of the present invention.

Fig. 12 is a cross-sectional view taken along the line XII-XII in Fig. 11.

Fig. 13 is a perspective view of a burner case in accordance with the sixth embodiment of the present invention.

Fig. 14 is a cross-sectional view of the projection which is a part of the burner case illustrated in Fig. 13.

Fig. 15 is a perspective view of the projection illustrated in Fig. 14.

Fig. 16 is a perspective view of a burner case in accordance with the seventh embodiment of the present invention.

Fig. 17 is a plan view of the slide plate used in the burner case illustrated in Fig. 16.

Fig. 18 is a perspective view of a burner case in accordance with the eighth embodiment of the present invention.

Fig. 19 is a cross-sectional view of the opening and the slide plate in the burner case illustrated in Fig. 18.

Fig. 20 is a cross-sectional view of the shield locker used in the burner case illustrated in Fig. 18.

Preferred embodiments in accordance with the present invention will be explained hereinbelow with reference to drawings.

### [First Embodiment]

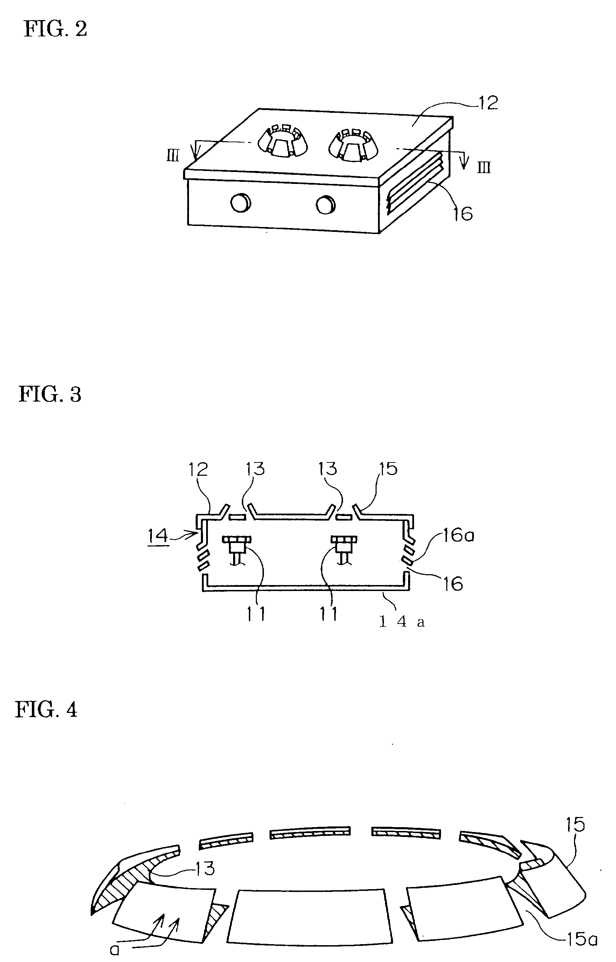

Fig. 2 is a perspective view of a burner assembly including a burner case in accordance with the first embodiment, Fig. 3 is a cross-sectional view taken along the line III-III in Fig. 2, and Fig. 4 is an enlarged perspective view of the later mentioned louver.

As illustrated in Fig. 3, the burner case 14 in accordance with the first embodiment has an upper surface 12 detachable from a case 14a which is open upwardly.

As illustrated in Fig. 3, two Bunsen burners 11 are arranged in the burner case 14. The upper surface 12 is formed with two annular openings 13 through which a flame generated from the burners 11 are introduced out of the burner case 14 to thereby heat an object (not illustrated) such as a cooking tool or food placed on the upper surface 12.

The upper surface 12 is formed along outer edges of the openings 13 with louvers 15 projecting upwardly and in inclination towards a center of the annular openings 13.

Thereby, it is noted that the burner or burners are not always part of the burner case. The burners could be produced in a separate module which can be attached to the burner case. Thus, in all embodiments according to the invention, the burner is not required to be part of the burner case even though this is preferred.

The flames produced by the burner go through the opening to the outside of the burner case.

Fig. 4 is an enlarged perspective view of the louver 15 formed around the annular opening 13.

Each of the burners 11 arranged in the burner case 14 is shaped in accordance with the annular opening 13 in order to introduce a flame through the annular opening 13.

The burner case 14 is formed at sidewalls thereof with an air inlet 16 through which air is introduced into the burner case 14. The burner case 14 is formed further with a louver 16a at the air inlet 16 to prevent wind from directly entering the burner case 14. A sufficient amount of air can be introduced into the burner case 14 through the air inlet 16 to generate a flame from the burners 11.

The louvers 15 projecting upwardly in inclination along the outer edges of the annular openings 13 act as a windshield, and prevent a flame from being fanned by wind coming in every direction.

As illustrated in Fig. 4 with an arrow "a", horizontally coming wind impinges on the louver 15 and is turned upwardly. Hence, the wind will not fan a flame blowing out of the opening 13.

The louver 15 is formed not entirely around the annular opening 13, but partially around the annular opening 13, as illustrated in Fig. 4. Specifically, the louvers 15 are spaced away by a constant distance 15a from adjacent ones, and the louvers 15 are arranged in a circle.

By spacing the louvers 15 away from adjacent ones, even when a cooking tool such as a pan is put over the louvers 15, air is introduced into the annular opening 13 through the spaces 15a. However, since the spaces 15 are so small that wind strong enough to fan a flame is not introduced through the spaces 15a.

Furthermore, it is possible to observe a burning condition of the burners 11 by looking through the spaces 15a.

### [Second Embodiment]

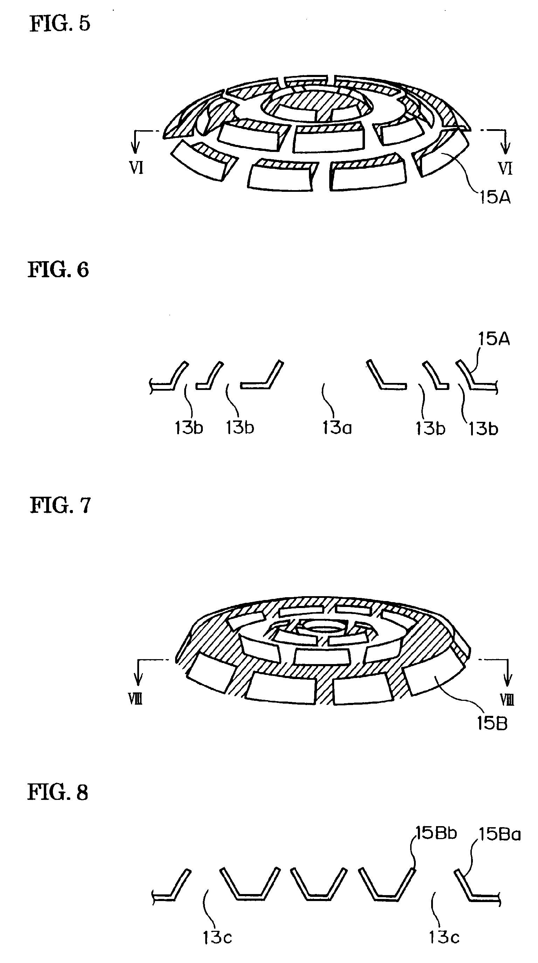

Fig. 5 is a perspective view of a burner case in accordance with the second embodiment, and Fig. 6 is a cross-sectional view taken along the line VI-VI in Fig. 5. Though Figs. 5 and 6 illustrate only an upper surface of a burner case, a burner assembly including the burner case has the same structure as the burner assembly illustrated in Fig. 2 except the upper surface of the burner case.

In the burner case in accordance with the second embodiment, the upper surface 12 is formed centrally with a circular opening 13a and further with a plurality of annular openings 13b coaxial with the central circular opening 13a. The upper surface 12 is formed along outer edges of the openings 13a and 13b with louvers 15A projecting upwardly and in inclination towards a center of the central circular opening 13a.

The burner case in accordance with the second embodiment provides the same advantages obtained by the above-mentioned first embodiment. In addition, by forming a plurality of the louvers 15A along the openings 13a and 13b, it would be possible to put a cooking tool having various sizes, directly on the louvers 15A, and to increase an area in which a flame generated from the burners 11 is applied to a cooking tool.

Similarly to the first embodiment, the louvers 15A are formed not entirely around the openings 13a and 13b, but partially around the openings 13a and 13b, as illustrated in Fig. 5. Specifically, the louvers 15 are spaced away by a constant distance from adjacent ones, and the louvers 15 are arranged in coaxial circles.

Though the louvers 15A are formed along outer edges of the openings 13a and 13b in inclination towards a center of the central circular opening 13a in the second embodiment, the louvers 15A may be formed along inner edges of the openings 13a and 13b in inclination outwardly of the openings 13a and 13b.

### [Third Embodiment]

Fig. 7 is a perspective view of a burner case in accordance with the third embodiment, and Fig. 8 is a cross-sectional view taken along the line VIII-VIII in Fig. 7. Though Figs. 7 and 8 illustrate only an upper surface of a burner case, a burner assembly including the burner case has the same structure as the burner assembly illustrated in Fig. 2 except the upper surface of the burner case.

In the burner case in accordance with the third embodiment, the upper surface 12 is formed with a plurality of annular openings 13c coaxial with one another. The upper surface 12 is formed along outer and inner edges of the openings 13c with louvers 15Ba and 15Bb projecting upwardly.

Unlike the louvers 15A in the second embodiment, the louvers 15Ba and 15Bb upwardly project in opposite directions. Specifically, the louvers 15Ba formed along outer edges of the annular openings 13c project upwardly and obliquely towards a center of the burner case, and the louvers 15Bb formed along inner edges of the annular openings 13c project upwardly and obliquely outward of the burner case. That is, the louvers 15Ba and 15Bb facing each other cooperate with each other to form a tapered structure having an upwardly reducing inner diameter.

The burner case in accordance with the third embodiment provides the same advantages as those of the second embodiment.

### [Fourth Embodiment]

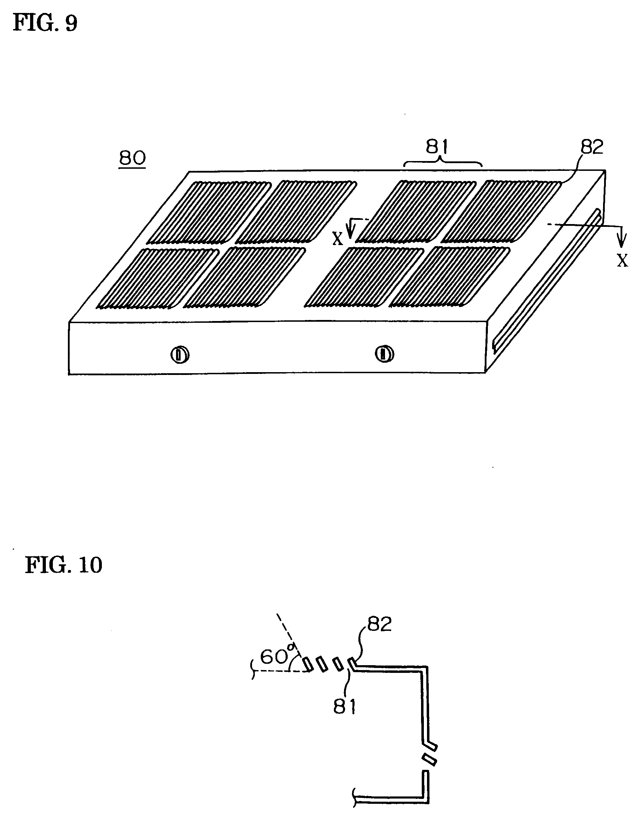

Fig. 9 is a perspective view of a burner assembly including a burner case 80 in accordance with the fourth embodiment.

The burner case 80 is formed at an upper surface thereof with a plurality of slits 81 in parallel with one another, and further with louvers 82 along outer edges of the slits 81. The louvers 82 are inclined in the same direction towards a center of the burner case 80. In the fourth embodiment, the louvers 82 are inclined by about 60 degrees.

Rectangular burners (not illustrated) having a shape in conformity with the arrangement of the slits 81 are arranged just below the slits 81 in the burner case 80.

A combination of the slits 81 and the louvers 82 increases an area in which a flame is applied to an object to be heated with the result of enhancement in a heat transfer efficiency, and makes it possible to put cooking tools having various sizes, on the upper surface of the burner case 80.

In addition, by arranging the slits 81 in parallel with one another, it would be possible to prevent wind from entering the slits 81 from backward of the louvers 82.

Though the louvers 82 are formed along outer edges of the slits 81 in the fourth embodiment, the louvers 82 may be formed along inner edges of the slits 81 so as to project upwardly in inclination towards outward of the burner case 80.

### [Fifth Embodiment]

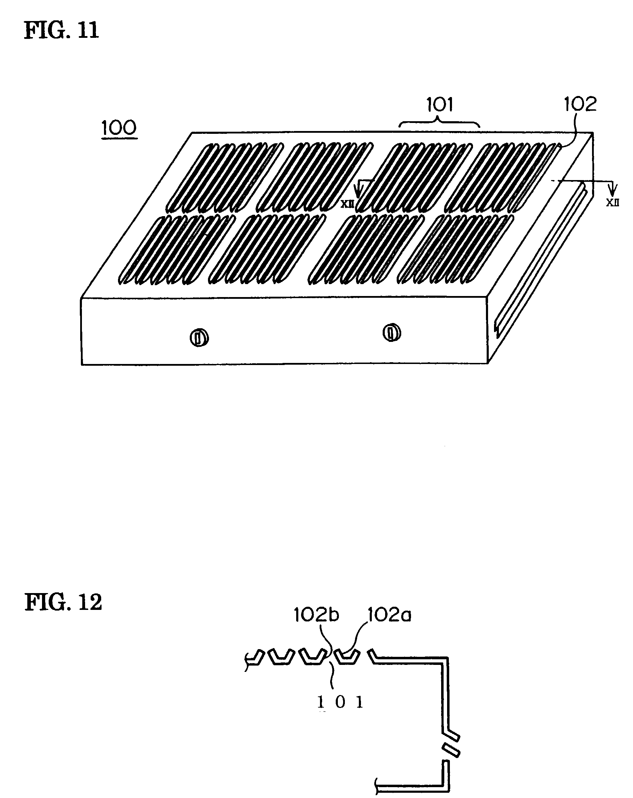

Fig. 11 is a perspective view of a burner assembly including a burner case 100 in accordance with the fifth embodiment.

The burner case 1000 is formed at an upper surface thereof with a plurality of slits 101 in parallel with one another, and further with louvers 102 along outer and inner edges of the slits 101. The louvers 102 project upwardly, obliquely.

Unlike the louvers 82 in the fourth embodiment, the louvers 102 upwardly project in opposite directions. Specifically, as illustrated in Fig. 12, a louver 102a formed along an outer edge of the slit 101 projects upwardly and obliquely towards a center of the burner case 100, and a louver 102b formed along an inner edge of the slit 101 projects upwardly and obliquely outward of the burner case 100. That is, the louvers 102a and 102b facing each other cooperate with each other to form a tapered structure having an upwardly reducing inner diameter.

Rectangular burners (not illustrated) having a shape in conformity with the arrangement of the slits 101 are arranged just below the slits 101 in the burner case 100.

The burner case 100 in accordance with the fifth embodiment provides not only the same advantages as those obtained by the fourth embodiment, but also advantages that it is possible to prevent wind from entering the slits 101 from frontward and backward of the slits 101, and that a flame can be converged into a specific area with the result of enhancement in an efficiency with which heat is transferred to an object to be heated.

### [Sixth Embodiment]

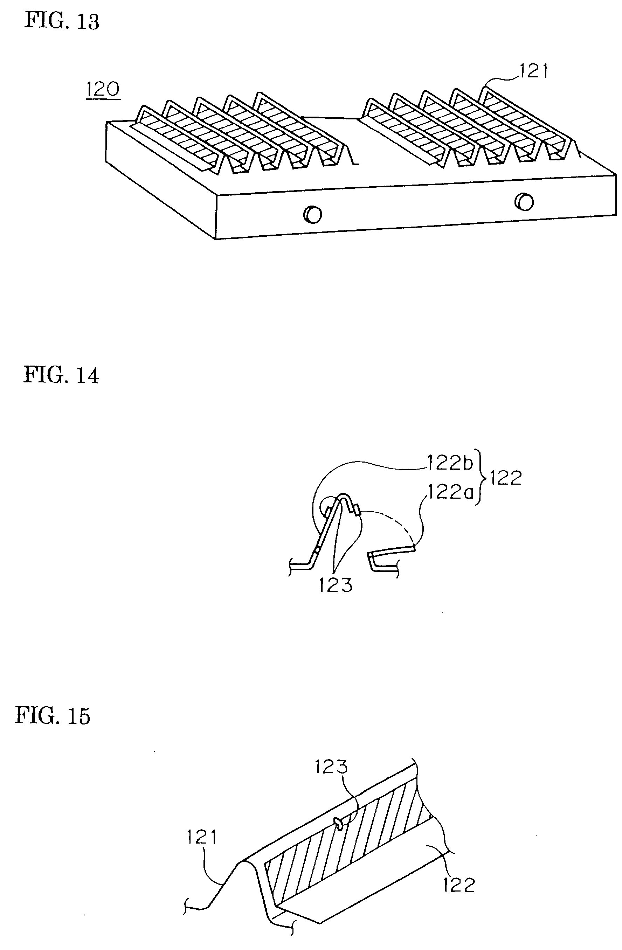

Fig. 13 is a perspective view of a burner assembly including a burner case in accordance with the sixth embodiment, Fig. 14 is a cross-sectional view of a later mentioned projection, and Fig. 15 is a perspective view of the projection.

A burner case 120 in the sixth embodiment is formed at an upper surface thereof with a plurality of hollow projections 121 extending in a width-wise direction of the burner case 120 in parallel with one another. Each of the projections 121 has a triangle cross-section such that the projection 121 has two sidewalls 122a and 122b.

As illustrated in Figs. 14 and 15, both of the sidewalls 122a and 122b are designed to be swingable around a lower end thereof relative to the upper surface of the burner case 120. Namely, the sidewalls 122a and 122b are able to be open and closed.

The projection 121 is formed in the vicinity of a summit thereof with a hook 123 rotatable relative to the projection 121. The hook 123 keeps the sidewalls 122a and 122b closed.

In cooking, an object to be heated, such as a pan, is put over the projections 121, and one or both of the sidewalls 122a and 122b are swung around the lower ends thereof such that the sidewalls 122a and/or 122b are open.

For instance, if wind blows from the right, the right sidewall 122a is closed by means of the hook 123, and the left sidewall 122b is made open. The right sidewall 122a serves as a windshield, and a flame is introduced outwardly through the left sidewall 122b which is kept open.

If a wind direction varies, and hence, wind blows from the left, the right sidewall 122a is made open, and the left sidewall 122b is closed by means of the hook 123. Thus, the left sidewall 122b serves as a windshield, and a flame is introduced outwardly through the right sidewall 122a which is open now.

By forming the projections 121 having the sidewalls 122a and 122b swingable around the lower ends thereof, at an upper surface of the burner case 120, it would be possible to prevent a flame from being fanned by wind, even if the wind blows from the right or left. It is no longer necessary to turn the burner case in order to prevent a flame from being fanned by wind, unlike a conventional burner case having a windshield for doing the same.

Any structure or unit may be used as a sidewall stopper in place of the hook 123, unless it can keep the sidewalls 122a and 122b closed.

### [Seventh Embodiment]

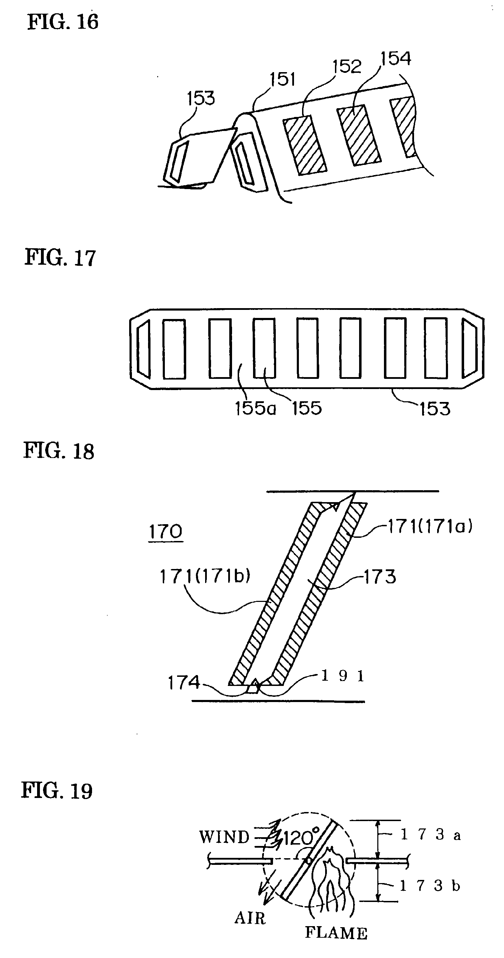

Fig. 16 is a perspective view of a projection formed at an upper surface of a burner case in accordance with the seventh embodiment.

A burner case in the seventh embodiment is formed at an upper surface thereof with a plurality of hollow projections 151 extending in a width-wise direction of the burner case in parallel with one another. Each of the projections 151 has a triangle cross-section such that the projection 151 has two sidewalls 152.

The burner case in accordance with the seventh embodiment is designed to include a slide plate 153 slidable on the sidewalls 152. As mentioned later, the sidewalls 152 are made open and closed by sliding the slide plate 153 on the sidewalls 152.

As illustrated in Fig. 16, the sidewalls 152 are formed with rectangular slits 154 equally spaced away from adjacent ones.

As illustrated in Fig. 17, the slide plate 153 is formed also with rectangular slits 155 equally spaced away from adjacent ones.

The slits 154 and 155 are equal in size to each other, and a distance between the adjacent slits 154 is equal to a distance between the adjacent slits 155.

As illustrated in Fig. 16, the slide plate 153 is slid along and on the sidewalls 152. When the slits 154 are in alignment with the slits 155, the slits 154 are open, and hence, a flame is introduced outwardly through the slits 154 and 155. In contrast, when the slits 154 are in alignment with non-slit portions 155a of the slide plate 153, the slits 154 are made closed.

For instance, if wind blows from the right, the slits 154 in the right sidewall 152 is closed by aligning the slits 154 with the non-slit portions 155a of the slide plate 153, and the slits 154 in the left sidewall 152 is made open by aligning the slits 154 with the slits 155 of the slide plate 153. Thus, the right sidewall 152 and the slide plate 153 serve as a windshield, and a flame is introduced outwardly through the slits 154 in the left sidewall 152.

If a wind direction varies, and hence, wind blows from the left, the slits 154 in the right sidewall 152 is made open, and the slits 154 in the left sidewall 152 are closed. Thus, the left sidewall 152 and the slide plate 154 serve as a windshield, and a flame is introduced outwardly through the slits 154 in the right sidewall 152.

Thus, the burner case in accordance with the seventh embodiment provides the same advantages as those of the sixth embodiment without having a sidewall stopper such as the hook 123.

### [Eighth Embodiment]

Fig. 18 is a perspective view of a burner case 170 in accordance with the eighth embodiment.

The burner case 170 is formed at an upper surface thereof with a rectangular opening 171. The burner case 170 includes a shield plate 173 which is equal in size to the rectangular opening 171. The shield plate 173 is designed to be rotatable around an axis of the shield plate 173 extending in a length-wise direction of the rectangular opening 171. The shield plate 173 rotates at least 180 degrees in the rectangular opening 171 such that the shield plate 173 entirely closes the opening 171 or partially opens the opening 171.

The shield plate 173 can be fixed at a predetermined angle relative to the upper surface of the burner case 170 by means of a shield plate locker 174.

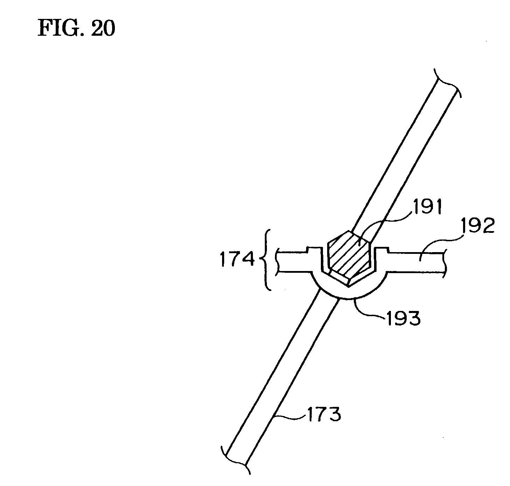

Fig. 20 illustrates a structure of the shield plate locker 174.

The shield plate locker 174 is comprised of shafts 191 extending from the shield plate 173 at opposite ends thereof and each having a hexagonal cross-section, and bearings 193 formed at an upper surface 192 of the burner case 170 to support said shafts therewith. Each of the bearings 193 has a recess having a cross-section of a half hexagon. Hence, the shaft 191 can be accommodated in the bearing 193 in any angle. That is, even after the shaft 191 has been rotated in every 60 degrees above the bearing 193, the shaft 191 can be accommodated in the bearing 193 by just lowering the shaft 191 down to the bearing 193.

In the eighth embodiment, the rectangular opening 171 can be open or closed by rotating the shield plate 173.

For instance, as illustrated in Fig. 19, if wind blows from the left, the shield plate 173 is rotated and kept at about 120 degrees relative to the wind. As a result, a portion 173a of the shield plate 173 projecting above the upper surface 192 serves as a windshield, and a portion 173b of the shield plate 173 located below the upper surface 192 serves as a guide for introducing a flame into an opening 171a (see Fig. 18).

In addition, air is introduced into the burner case 170 through an opening 171b defined above the portion 173b of the shield plate 173. Hence, it is possible to supply a sufficient amount of air to the burners to make a flame.

When an inclination angle of the shield plate 173 is to be changed, the shield plate 173 is lifted up from the bearing 193, the shield plate 173 is rotated by a desired angle, and then, the shaft 191 is lowered down to the bearing 193. Thus, the shield plate 173 can be kept at a desired angle relative to the opening 171.

It should be noted that since the shield plate 173 is symmetrical in weight about the shafts 191, no torsional moment is exerted on the shield plate 173.

The shield plate locker 174 may have a different structure from the above-mentioned one, if the structure can keep the shield plate 173 at a desired angle relative to the opening 171.

The upper surfaces of the burner cases in accordance with the above-mentioned embodiments may be designed detachable from the burner cases.

By designing the upper surfaces detachable from the burner cases, it would be possible to detach the upper surface in a windless day, and put a net or a support stand on a burner case in place of the upper surface. Thus, a burner assembly may be used in the same manner as that of a conventional burner assembly. In addition, the detached upper surface can be readily washed.

## Claims

1. A burner case (14) in which at least one burner (11) is to be arranged and which has an upper surface (12) formed with at least one opening (13),
a flame produced by the burner (11) being introduced externally through the opening (13) for heating an object put on the upper surface (12) of the burner case (14),
characterized in that
the upper surface (12) is formed along the opening (13) with an upwardly projecting louver (15) which acts as a windshield for the flame.

2. The burner case as set forth in claim 1, wherein the opening is an annular opening (13), and the louver (15) is formed in inclination along the annular opening (13) at an outer edge of the annular opening (13).

3. The burner case as set forth in claims 1 or 2, wherein the opening is comprised of a plurality of annular openings (13a, 13b) coaxial with one another, and the louver (15A) is formed in the same inclination along each of the annular openings (13a, 13b).

4. The burner case as set forth in claim 3, wherein the louver (15A) is formed at outer edges of the annular openings (13a, 13b).

5. The burner case as set forth in claims 1 or 2, wherein the opening is comprised of a plurality of annular openings (13c) coaxial with one another, and louvers (15B) are formed in opposite inclination along edges of adjacent annular openings among the annular openings (13c).

6. The burner case as set forth in claim 5, wherein first and second louvers (15Ba, 15Bb) are formed along outer and inner edges of each of the annular openings (13c), respectively, the first and second louvers (15Ba, 15Bb) being directed towards a center line of each of the annular openings (13c).

7. The burner case as set forth in claim 1, wherein the opening is a slit (81), and the louver (82) is formed along an edge of the slit (81).

8. The burner case as set forth in claim 7, wherein the louver (82) has opposite rounded ends such that the louver (82) surrounds the slit (81).

9. The burner case as set forth in claim 7, wherein the opening is comprised of a plurality of slits (81) arranged in parallel with one another, and the louver (82) is formed in the same inclination along each of the slits (81).

10. The burner case as set forth in claim 9, wherein the louver (82) is formed at outer edges of the slits (81).

11. The burner case as set forth in claim 7, wherein the opening is comprised of a plurality of slits (101) arranged in parallel with one another, and the louver (102a, 102b) is formed in opposite inclination along edges of adjacent slits among the slits (101).

12. The burner case as set forth in claim 11, wherein first and second louvers are formed along outer and inner edges of each of the slits, respectively, the first and second louvers being directed towards an opposite edge of each of the slits.

13. The burner case as set forth in claim 1, wherein the louver is in the form of a hollow projection (121) covering the opening therewith, the projection (121) having a triangle cross-section such that the projection (121) has two sidewalls (122a, 122b), at least one of the sidewalls (122a, 122b) being designed to be able to be open and closed.

14. The burner case as set forth in claim 13, wherein the at least one of the sidewalls (122a, 122b) is swingable around a lower end thereof relative to the upper surface of the burner case, and further comprising a sidewall stopper (123) which keeps the at least one of the sidewalls (122a, 122b) closed.

15. The burner case as set forth in claim 14, wherein the sidewall stopper is comprised of a hook (123) fixed to an outer surface of the projection (121) in the vicinity of a summit of the projection (121).

16. The burner case as set forth in claim 1, wherein the louver is in the form of a hollow projection (151) covering the opening therewith, the projection (151) having a triangle cross-section such that the projection (151) has two sidewalls (152), at least one of the sidewalls (152) being formed with at least one second opening (154),
the burner case further comprising a slide plate (153) formed with a third opening (155), the slide plate (153) being slidable along an outer surface of the at least one of the sidewalls (152),
the at least one of the sidewalls (152) being open when the third opening (155) is in alignment with the second opening (154), and being closed when the third opening (155) is not in alignment with the second opening (154).

17. The burner case as set forth in claim 1, 13 or 16, wherein the upper surface (12) is detachable from the burner case.

18. A burner case in which at least one burner (11) is to be arranged and which has an upper surface (192) formed with at least one opening (171),
a flame produced by the burner (11) being introduced externally through the opening (171) for heating an object put on the upper surface (192) of the burner case,
the burner case comprising:
a shield plate (173) rotatable in the opening (171) such that the shield plate (173) entirely closes the opening (171) and the shield plate (173) at least partially opens the opening (171); and
a shield plate locker (174) which keeps the shield plate (173) at a desired angle relative to the opening (171).

19. The burner case as set forth in claim 18, wherein the shield plate locker (174) is comprised of:
shafts (191) extending from the shield plate (173) at opposite ends thereof and each having a rectangular cross-section; and
bearings (193) formed at the upper surface to support the shafts (191) therewith, the bearings (193) being formed with a recess having a cross-section which is the same as a half of the rectangular cross-section of the shafts (191).

20. The burner case as set forth in claim 18 or 19, wherein the upper surface is detachable from the burner case.
